# EUROPEAN PATENT APPLICATION

(11) **EP 3 952 074 A1**
(43) Date of publication of application: **09.02.2022**
(21) Application number: 20776747.6
(22) Date of filing: 10.03.2020
(51) Int. Cl.: H02K 9/19, F01D 25/24, F01D 25/26, F02K 9/46, F04D 13/06, F04D 29/58, H02K 5/20, H02K 7/14, H02K 9/08

(54) **CANNED MOTOR AND PUMP DRIVEN BY SAME, AND ROCKET ENGINE SYSTEM AND LIQUID FUEL ROCKET EMPLOYING SAME**

(30) Priority: 26.03.2019 JP 2019059127
(71) Applicant: Ebara Corporation, Tokyo 144-8510 (JP)
(72) Inventor: HONDA, Shuichiro, Tokyo 144-8510 (JP); MATAKE, Kozo, Tokyo 144-8510 (JP); WATANABE, Hiroyoshi, Tokyo 144-8510 (JP); BARADA, Toshimitsu, Tokyo 144-8510 (JP); IKEDA, Hayato, Tokyo 144-8510 (JP)
(74) Representative: Wimmer, Hubert
(86) International application number: PCT/JP2020/010287
(87) International publication number: WO 2020/195792

(57) **Abstract**

Provided is a canned motor in which vaporization of the handling liquid is reduced in a case where a rotor rotates at high speed. A canned motor 10 includes a stator 18 disposed in a stator chamber 26, a rotor 14 disposed in a rotor chamber 12, and a stator can 7 enclosing the rotor 14. Furthermore, the canned motor 10 includes a stator chamber inlet portion 43 configured such that a cooling liquid for cooling the stator 18 flows into the stator chamber 26, and a stator chamber outlet portion 44 configured such that the cooling liquid flows out from the stator chamber 26.

## Description

### TECHNICAL FIELD

The present invention relates to a canned motor and la pump driven by the canned motor, and a rocket engine system and a liquid propellant rocket employing the canned motor.

### BACKGROUND ART

A liquid propellant rocket is a rocket that obtains thrust by feeding a low-boiling-point propellant (fuel) such as liquid hydrogen or liquid methane and a low-boiling-point oxidant such as liquid oxygen (both agents are liquid) from respective tanks to a high-pressure combustion chamber, and injecting, from a nozzle, a high-temperature gas generated by burning in the combustion chamber. A pump system of feeding the propellant and oxidant into the combustion chamber with a pump may be used in the liquid propellant rocket.

An electric motor, for example, a canned motor can be used to drive the pump. In a pump in which a conventional canned motor is used, a motor rotor itself is immersed in a liquid (handling liquid) transported with a pump blade of the pump. A metal or resin can (hereinafter, referred to as "the stator can") is airtightly fitted inside a motor stator. In an outer circumference of the rotor, the metal or resin can as part of the rotor (hereinafter, referred to as "the rotor can") is disposed. The stator is insulated from the liquid transported with the pump by the stator can. The liquid enters the outer circumference of the rotor in the motor, and performs cooling. Heretofore, the canned motor has been used to transport a chemical liquid, a toxic liquid or the like because leakage of the handling liquid is not desirable.

The pump in which the conventional canned motor is used runs the handling liquid around the rotor (a clearance between the rotor can and the stator can) for using the handling liquid of the pump as a cooling liquid of the canned motor at a rotation speed of usually about 3600 rpm. The handling liquid flows around the rotor, to cool the stator and the rotor. That is, the stator comprises a motor coil including a wound electric wire for generating an electromagnetic force to drive the rotor, and during driving of the motor, current is supplied to the motor coil, to generate Joule heat in the motor coil. The motor coil is wound around a silicon steel plate of the stator. Heat generation of the stator is dominantly heat generation due to eddy current loss of the silicon steel plate. There is concern that rise in temperature of the stator due to this Joule heat and eddy current loss causes burning of the coil and an insulator. Further, the rotor receives electromagnetic action caused by the stator to generate a driving force, and the rotor also generates heat due to electric loss in the same manner as in the stator. There is concern that the rise in temperature due to the heat generation demagnetizes a magnet (depending on the temperature and a type of magnet), and decreases a power factor and efficiency. To solve this problem, the handling liquid is run around the rotor, to cool the stator and the rotor, so that the decrease in efficiency of the motor can be avoided. However, a coil end being part of the stator and an end portion of the motor coil is disposed away from the clearance between the rotor can and the stator can, that is, away from the cooling liquid, and is therefore disposed at a position that is hard to be cold even in related art.

Additionally, in a case where the rotor is rotated at high speed (from 10,000 to 100,000 rpm), a conventional cooling method has a problem as follows. That is, the low-boiling-point handling liquid around the rotor becomes easy to gasify due to a lot of heat generated by the stator for rotating the rotor at high speed, and entering the handling liquid around the rotor from the stator, and due to rotational friction heat loss generated between the rotor rotated at high speed and a fluid. The gasifying causes problems that the coil end is harder to be cold and that the temperature of the stator rises. The gasifying further causes a problem that the rotor or another rotating body tends to vibrate.

In the case where the rotor is rotated at the high speed (from 10,000 to 100,000 rpm), the conventional cooling method has another problem as follows. That is, rotational friction loss due to the handling liquid flowing through the clearance between the rotor can and the stator can, that is, the cooling liquid increases noticeably, and the pump efficiency decreases. The rotational friction loss is energy loss due to a frictional force generated between the rotor can on a rotor surface and the handling liquid (fluid) (shear force acting on the fluid). The rotational friction loss is like an amount of output torque of the motor that is consumed by the frictional force. The higher a viscosity of the handling liquid is, or the higher a relative flow velocity of the rotor and handling liquid in a direction of rotation is, the larger the rotational friction loss becomes. The rotation speed may not increase up to an operating rotation speed that is a specification value required for the pump, depending on the situation.

Consequently, in the case where the rotor rotates at the high speed (from 10,000 to 100,000 rpm), there are a time when the vaporization of the handling liquid is to be reduced, and a time when the rotational friction loss due to the cooling liquid is to be reduced. The problem to be more preferentially solved depends on a state of use or purpose of use of the canned motor.

### CITATION LIST

### PATENT LITERATURE

PTL 1: Japanese Patent Laid-Open No. 52-137611
PTL 2: Japanese Patent Laid-Open No. 2-193546
PTL 3: Japanese Patent Laid-Open No. 8-200274
PTL 4: Japanese Patent Laid-Open No. 2012-213272
PTL 5: Japanese Translation of PCT International Application Publication No. 2016-52744

### SUMMARY OF INVENTION

### TECHNICAL PROBLEM

An aspect of the present invention has been developed to solve such problems, and an object thereof is to provide a canned motor in which vaporization of the handling liquid is reduced in a case where a rotor rotates at high speed.

Furthermore, an object of another aspect of the present invention is to provide a canned motor in which rotational friction loss due to a cooling liquid is reduced or the rotational friction loss due to the cooling liquid is avoided, in a case where a rotor rotates at high speed.

### SOLUTION TO PROBLEM

To achieve the above objects, in Aspect 1, employed is a configuration of a canned motor including a stator disposed in a stator chamber, a rotor disposed in a rotor chamber, and a can enclosing the rotor, and including a rotor chamber inlet portion configured such that a cooling liquid for cooling the rotor flows into the rotor chamber, and a rotor chamber outlet portion configured such that the cooling liquid flows out from the rotor chamber, the canned motor being characterized by including a stator chamber inlet portion configured such that a cooling liquid for cooling the stator flows into the stator chamber, and a stator chamber outlet portion configured such that the cooling liquid flowing inside from the stator chamber inlet portion flows out from the stator chamber.

In the present embodiment, the cooling liquid, or a propellant (fuel), for example, an electrically insulating liquid such as liquid methane or liquid hydrogen is supplied to the stator chamber. As a result, a coil end of the stator is cooled. Consequently, heat generated in the stator, and entering a handling liquid around the rotor from the stator can be reduced, to reduce vaporization of the handling liquid around the rotor during high-speed rotation. In addition, the stator chamber means a room or space in which the stator is disposed. The rotor chamber means a room or space in which the rotor is disposed.

To achieve the above other object, Aspect 2 employs a configuration of a canned motor including a stator disposed in a stator chamber, a rotor disposed in a rotor chamber, and a can enclosing the rotor, and being characterized by including a rotor chamber inlet portion configured such that a cooling gas for cooling the rotor flows into the rotor chamber, and a rotor chamber outlet portion configured such that the cooling gas flows out from the rotor chamber.

In the present embodiment, the cooling gas flows into the rotor chamber. Consequently, the cooling gas for cooling the rotor, such as helium, hydrogen, or methane is supplied to an outer circumference of the rotor (e.g., a clearance between a rotor can and a stator can). Rotational friction loss due to the gas is smaller than rotational friction loss due to the liquid, and hence the rotor can be cooled while reducing the friction loss generated by high-speed rotation of the rotor.

Aspect 3 employs a configuration of the canned motor according to claim 2 that is characterized by including a stator chamber inlet portion configured such that a cooling liquid for cooling the stator flows into the stator chamber, and a stator chamber outlet portion configured such that the cooling liquid flows out from the stator chamber.

According to the present embodiment, in a case where the cooling gas is used to cool the rotor, when the stator cannot be sufficiently cooled only by cooling the rotor with the cooling gas, the stator can be appropriately cooled. This is because the cooling gas has a quantity of heat that is smaller than that of the cooling liquid, and therefore has a lower cooling capacity, and it is desirable to cool the stator directly with the cooling liquid. In addition, when the stator can be sufficiently cooled only by cooling the rotor with the cooling gas, the stator does not have to be cooled.

Aspect 4 employs a configuration of the canned motor according to any one of Aspects 1 to 3, wherein the rotor is configured to rotate from 10,000 times to 100,000 times per minute.

Aspect 5 employs a configuration of the canned motor according to any one of Aspects 1 to 4, wherein the cooling liquid is a handling liquid of the canned motor.

Aspect 6 employs a configuration of the canned motor according to any one of Aspects 1 to 5, characterized by including a drive circuit disposed in a drive circuit chamber and configured to drive the rotor, a drive circuit chamber inlet portion configured such that a cooling liquid for cooling the drive circuit flows into the drive circuit chamber, and a drive circuit chamber outlet portion configured such that the cooling liquid flows out from the drive circuit chamber.

Aspect 7 employs a configuration of the canned motor according to Aspect 6, wherein the stator chamber and the drive circuit chamber are connected in series with respect to the flow of the cooling liquid.

Aspect 8 employs a configuration of a rocket engine system including a plurality of the canned motors according to any one of Aspects 1 to 7, and further including a fuel supply pump configured to be driven by one of the plurality of canned motors, an oxidant supply pump configured to be driven by another one of the plurality of canned motors, and a combustion chamber configured to be supplied with fuel by the fuel supply pump, and to be supplied with oxidant by the oxidant supply pump.

Aspect 9 employs a configuration of a rocket engine system including a plurality of the canned motors according to any one of Aspects 1 to 7, and a fuel supply pump configured to be driven by one of the plurality of canned motors, wherein the fuel is supplied to the plurality of canned motors by the fuel supply pump.

Aspect 10 employs a configuration of a rocket engine system including a plurality of canned motors, and a fuel supply pump configured to be driven by one of the plurality of canned motors, wherein fuel is supplied to the plurality of canned motors by the fuel supply pump.

Aspect 11 employs a configuration of a liquid propellant rocket including the rocket engine system according to any one of Aspects 8 to 10.

Furthermore, in a case where the cooling liquid for cooling the stator flows into the stator chamber, it is possible to employ a configuration of the rocket engine system according to Aspect 7, wherein the respective stator chambers of the plurality of canned motors are connected in series or in parallel with respect to the flow of the cooling liquid for cooling the stator.

In addition, in a case where the cooling gas or the cooling liquid for cooling the rotor flows into the rotor chamber, it is possible to employ a configuration of the rocket engine system according to Aspect 7, wherein the respective rotor chambers of the plurality of canned motors are connected in series or in parallel with respect to the flow of the cooling gas or the cooling liquid for cooling the rotor.

### BRIEF DESCRIPTION OF DRAWINGS

[Fig. 1] Fig. 1 is a view showing a canned motor according to an embodiment of the present invention.
[Fig. 2] Fig. 2 is a block diagram showing an entire configuration of a rocket engine system according to an embodiment of the present invention.
[Fig. 3] Fig. 3 is a view showing a canned motor according to another embodiment of the present invention.
[Fig. 4] Fig. 4 is a block diagram showing an entire configuration of a rocket engine system according to another embodiment of the present invention.
[Fig. 5] Fig. 5 is a block diagram showing an entire configuration of a rocket engine system according to still another embodiment of the present invention.

### DESCRIPTION OF EMBODIMENTS

Hereinafter, description will be made as to embodiments of the present invention with reference to the drawings. Note that in the following respective embodiments, the same or corresponding member is denoted with the same reference sign, and redundant description will not be repeated. Also, characteristics illustrated in the respective embodiments are also applicable to another embodiment unless being contradictory to one another.

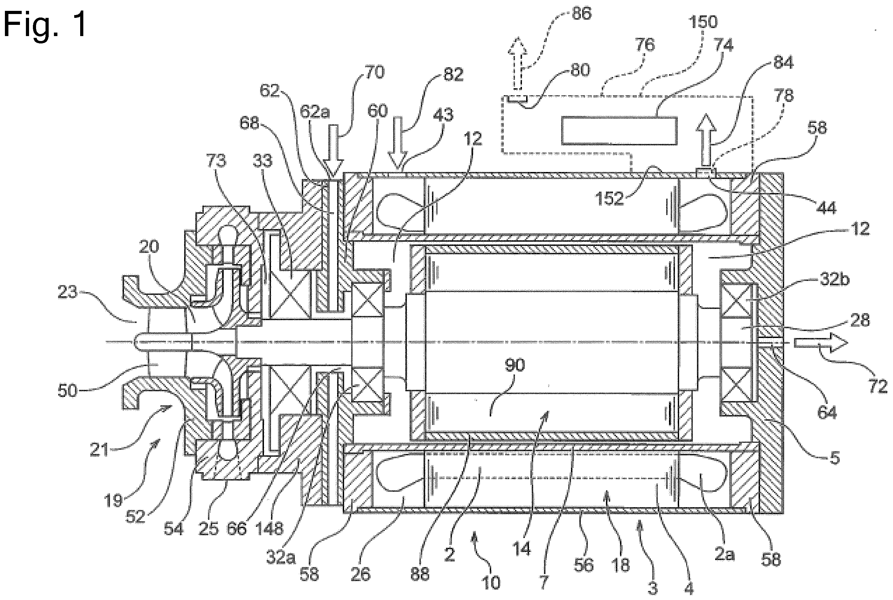

Fig. 1 is a view showing a canned motor according to an embodiment of the present invention, and a pump to be driven by this canned motor. Such type of pump is called a canned motor pump. The canned motor according to the present embodiment is a canned motor in which vaporization of the handling liquid in a rotor chamber is reduced in a case where a rotor rotates at high speed (from 10,000 to 100,000 rpm). Hereinafter, the canned motor will be called a motor unit 10, and the pump will be called a pump unit 19.

The motor unit 10 and the pump comprising the pump unit 19 according to the present embodiment are for use in a rocket engine system. Therefore, examples of the handling liquid of the pump unit 19 include fuel and oxidant of a rocket engine. In addition, the canned motor according to the present embodiment is also usable in a use application in which the rotor rotates at high speed (from 10,000 to 100,000 rpm), other than the rocket engine system. Note that the canned motor pump is not limited to the high-speed rotation, and in general, part of the handling liquid boosted in an impeller 20 of the pump unit 19 passes through a space formed around a spindle 28 between a discharge casing 54 and the motor unit 10, and is supplied to a rotor chamber 12, to cool the motor unit 10. However, this is limited to a case where the handling liquid is the fuel such as liquid hydrogen or liquid methane or the like that may be supplied to the rotor chamber 12. Note that in this case, a mechanical seal 33 does not necessarily have to be provided. On the other hand, in a case where the handling liquid of the canned motor pump is a dangerous liquid such as the oxidant (liquid oxygen) that can react with a rotor 14 and ignite, it is necessary to dispose a shaft sealing device such as the mechanical seal between the pump unit 19 and the motor unit 10, and to prevent the handling liquid from flowing into the rotor chamber 12. In this case, a rotor chamber inlet portion 62 configured such that a cooling liquid for cooling the motor unit 10 flows into the rotor chamber 12 is disposed, and another cooling liquid is supplied from the portion to the rotor chamber 12. Note that the handling liquid (cooling liquid) of the motor includes the fuel, and the handling liquid of the pump includes the fuel and oxidant.

The motor unit 10 includes a stator 18 disposed in a stator chamber 26, the rotor 14 disposed in the rotor chamber 12, and a stator can 7 enclosing the rotor 14. The motor unit 10 includes a stator chamber inlet portion 43 configured such that the cooling liquid for cooling the stator 18 flows into the stator chamber 26, and a stator chamber outlet portion 44 configured such that the cooling liquid flows out from the stator chamber 26.

The rotor 14 rotates from 10,000 times to 100,000 times per minute. Each part of the motor unit 10 generates an increased quantity of heat for rotating at the high speed. For this purpose, various measures are taken. As an example, the heat generated under the high-speed rotation is cooled with the fuel passing through the rotor chamber 26 in two radial bearings 32 (ball bearings) that support the spindle 28. Thus, in the present embodiment, the cooling liquid is the handling liquid of the pump unit 19.

In the present embodiment, each of the stator 18 and the rotor 14 is cooled by supplying the liquid. Description will be made later as to an embodiment where the stator 18 is cooled with the liquid and the rotor 14 is cooled with a gas.

The pump unit 19 comprises the impeller 20 and a pump casing 21. The pump casing 21 includes a suction cover 52 and the discharge casing 54. The cover 52 is provided with a suction port 23, and the discharge casing 54 is provided with a discharge port 25. The handling liquid is suctioned from the suction port 23 of the pump casing 21 to the impeller 20, boosted by rotation of the impeller 20, and fed under pressure from the discharge port 25 of the pump casing 21 to an exterior of the pump. In addition, the pump unit 19 rotates at high speed, and hence, for the purpose of improving a suction performance of the fuel or oxidant, an inducer 50 is disposed immediately before the impeller 20 in the pump unit 19.

The impeller 20 is rotated by the motor unit 10. The motor unit 10 includes the rotor 14, the stator 18, a motor casing 3, the stator can 7, and the spindle 28. The impeller 20 is attached to the spindle 28 to which the rotor 14 is fixed. The spindle 28 is rotatably supported with the radial bearing 32 disposed in the motor casing 3.

The motor casing 3 is also called a motor housing or a motor frame. The motor casing 3 includes a cylindrical first motor frame 56, a bearing cover 5 that closes opposite ends of the first motor frame 56, a second motor frame 58, and a bearing casing 60. The cylindrical stator can 7 is disposed on an inner side of the first motor frame 56. The first motor frame 56, the bearing cover 5, the second motor frame 58 and the bearing casing 60 are separate components in the present embodiment, but these components may be arbitrarily combined as an integrated component. For example, the bearing cover 5, the first motor frame 56 and the second motor frame 58 can be the integrated component.

The cylindrical stator can 7 is fixed by the bearing cover 5, the second motor frame 58 and the bearing casing 60. The stator chamber 26 is formed by the first motor frame 56 and the second motor frame 58 of the motor casing 3, and the stator can 7. The handling liquid flows into the stator chamber 26. The radial bearing 32 is fixed to the bearing cover 5 and the bearing casing 60 of the motor casing 3.

The mechanical seal 33 is disposed as the shaft sealing device between the motor casing 3 and the spindle 28. The mechanical seal 33 prevents the liquid from flowing from the pump unit 19 into the rotor chamber 12. In this drawing, a radial bearing 32a is disposed on a right side of the mechanical seal 33 (rotor side of the motor unit 10), but the radial bearing 32a may be disposed on a left side of the mechanical seal 33 (pump unit 19 side). In this case, the bearing 32a is cooled with the handling liquid discharged from the impeller 20. Alternatively, in place of the mechanical seal 33 or together with the mechanical seal 33, a floating ring or labyrinth seal may be used.

The rotor 14 generates a rotational force due to electromagnetic action generated by the stator 18 disposed in the stator chamber 26. The rotor 14 includes a rotor core 90 disposed around the spindle 28 that is a rotary shaft, and a rotor can 88 disposed around the rotor core 90.

The stator 18 includes a substantially cylindrical stator core 4 including a large number of axial slots, and a motor coil 2 housed in these axial slots. In opposite end portions of the motor coil 2 in an axial direction, coil end portions 2a are provided. Power is supplied, for example, from a drive circuit 74 to be described later to the motor coil 2, and accordingly, the stator 18 generates rotating magnetic field.

The stator can 7 made of a nonmagnetic thin cylindrical metal or resin having large specific resistance is disposed between the rotor 14 and the stator 18. The rotor 14 is disposed in the stator can 7, and the rotor 14 is immersed in the cooling liquid. In the present embodiment, this cooling liquid is part of a fluid boosted by the pump unit 19.

The motor unit 10 includes the rotor chamber inlet portion 62 configured such that a cooling liquid for cooling the rotor 14 flows into the rotor chamber 12, and a rotor chamber outlet portion 64 configured such that the cooling liquid flows out from the rotor chamber 12. The rotor chamber inlet portion 62 is formed in the bearing casing 60. The rotor chamber inlet portion 62 includes an inlet 62a and a flow path 68. The flow path 68 is disposed on the right side of the mechanical seal 33 (rotor side of the motor unit 10) and communicates with a space that is on the left side of the rotor core 90 (pump unit 19 side), regardless of positional relation between the mechanical seal 33 and the radial bearing 32a. In other words, the flow path communicates between the mechanical seal 33 and the rotor core 90. In Fig. 1, the flow path communicates with a space 66 provided between the bearing casing 60 and the spindle 28. The space 66 is part of the rotor chamber 12.

A plurality of inlets 62a of the rotor chamber inlet portion 62 may be provided in the bearing casing 60. A plurality of flow paths 68 may be provided in the bearing casing 60. Correspondence between the inlet 62a and the flow path 68 is not limited to one-to-one, and may be one-to-plurals, plurals-to-one, or plurals-to-plurals. In a case of one-to-plurals, for example, a plurality of flow paths 68 are radially provided in a radial direction as seen from the spindle 28 (rotary shaft). One inlet 62a connected to the plurality of flow paths 68 is open in an outer circumference of the bearing casing 60 in a circumferential direction. In a case of plurals-to-one, for example, one flow path 68 is connected to the plurality of inlets 62a.

The rotor chamber inlet portion 62 may be disposed, for example, in the second motor frame 58 that is a component other than the bearing casing 60. In this case, according to this drawing, the rotor chamber inlet portion 62 extends through the second motor frame 58 and the stator can 7, and communicates with the rotor chamber 12.

The flow path 68 may be linearly disposed or spirally disposed in the radial direction in the bearing casing 60. The rotor chamber outlet portion 64 is disposed in the bearing cover 5, and a radial bearing 32b is disposed between the rotor core 90 and the rotor chamber outlet portion 64. In the present embodiment, the rotor chamber outlet portion 64 is disposed in a central portion of the bearing cover 5. The rotor chamber outlet portion 64 may be disposed in a portion other than the central portion of the bearing cover 5. Alternatively, a plurality of rotor chamber outlet portions 64 may be provided in the bearing cover 5. The rotor chamber outlet portion 64 may be disposed in a component other than the bearing cover 5 depending on the situation, for example, the second motor frame 58.

The rotor chamber 12 is formed by the stator can 7, the bearing cover 5, and the bearing casing 60. The cooling liquid flowing inside from the rotor chamber inlet portion 62 as shown with an arrow 70 passes through the space 66 and the radial bearing 32a, and flows into the stator can 7 (the rotor chamber 12 on the right side of the radial bearing 32a). The cooling liquid further passes through the stator can 7 (an outer circumference of the rotor 14 (e.g., a clearance between the rotor can 88 and the stator can 7) or the like) and the radial bearing 32b. Afterward, the cooling liquid flows out from the rotor chamber outlet portion 64 as shown with an arrow 72, and is then fed to a combustion chamber.

The cooling liquid may flow inside in an opposite direction to that in this drawing. That is, the cooling liquid may flow into the rotor chamber outlet portion 64, and flow out from the rotor chamber inlet portion 62. In a case where the cooling liquid flows inside from the rotor chamber inlet portion 62 as shown in Fig. 1, there are advantages as follows. In a case where a pressure of the cooling liquid flowing into the space 66 from the rotor chamber inlet portion 62 is higher than a pressure of the fluid that is in a space 73 (space facing the space 66 via the mechanical seal 33), the fluid in the space 73 can be prevented from leaking to the space 66.

The stator chamber 26 that is a sealed space is formed between the stator can 7 and the motor casing 3. The stator 18 is disposed in the sealed space. The stator can 7 having a function of a partition wall is disposed on an inner side of the stator 18, to prevent the cooling liquid in the rotor chamber 12 from entering the stator 18.

The canned motor pump rotates in a state where the rotor 14 is immersed in the cooling liquid, and hence friction loss is generated between the cooling liquid and the rotor 14. Therefore, the canned motor pump is often used in a special use application such as a case where leak of the dangerous liquid or the like to the exterior of the pump is especially unfavorable.

Usually in the canned motor pump, heat generated due to mechanical and electromagnetic loss generated in the rotor 14, the bearing 32, the stator can 7 and the like is transferred to the cooling liquid that is around the rotor 14. In an example of this drawing, part of the handling liquid pressurized in the impeller 20 is guided as the cooling liquid for the rotor 14 or the like from the rotor chamber inlet portion 62 to the rotor chamber 12.

The cooling liquid in the rotor chamber 12 cools the radial bearing 32a on the left side in this drawing, and then eliminates generated heat from a corresponding portion when passing through a clearance between the rotor 14 and an inner circumferential surface of the stator can 7. Next, the cooling liquid passes through the radial bearing 32b on the right side in this drawing and finally flows out from the rotor chamber outlet portion 64. Part of heat generated due to electric loss generated in the stator core 4 and the motor coil 2 is removed with the cooling liquid in the rotor chamber 12 via the stator can 7 disposed on an inner side of the stator core 4.

However, in a case where the rotor 14 rotates at high speed (from 10,000 to 100,000 rpm), the electric loss generated in the stator 18 is larger than that in a conventional canned motor pump. Consequently, if heat is released from the stator to the handling liquid around the rotor as before, gasification (vaporization) of the handling liquid flowing between the stator and the rotor might be accelerated by a large quantity of heat received from the stator 18, because the handling liquid around the rotor is liquid fuel such as low-boiling-point liquid hydrogen or liquid methane. Consequently, the handling liquid is hard to flow between the stator and the rotor, and it is difficult to cool a coil end of the stator, which might result in sudden rise in temperatures of the stator and rotor to stop functioning. Even if the problem is not to such a degree, there is concern that the rotor or another rotating body vibrates due to the gasification (vaporization) of the handling liquid flowing between the stator and the rotor.

In the present invention, possibility of occurring of the above phenomenon is assumed, and purpose is to efficiently cool the rotor and stator of the canned motor by burdening the cooling liquid in the rotor chamber 12 with a function of removing heat loss due to rotational friction or the like generated by the high-speed rotation of the rotor without supplying heat from the stator to the liquid as much as possible, and by burdening, on the other hand, the cooling liquid in the stator chamber 26 with a function of preferentially cooling the stator and the coil end of the stator without supplying heat from the stator to the rotor as much as possible.

The cooling liquid flows into the stator chamber 26 from the stator chamber inlet portion 43 disposed in an outer wall of the motor casing 3 between the stator 18 and the pump unit 19 as shown with an arrow 82, and flows out from the stator chamber outlet portion 44 disposed in the outer wall of the motor casing 3 on a side opposite to the pump unit 19 of the stator 18 as shown with an arrow 84.

To supply no heat of the stator chamber to the rotor chamber as much as possible, it is preferable that a temperature of the cooling liquid to be supplied to the stator chamber is equal to or less than a temperature of the cooling liquid to be supplied to the rotor chamber. Consequently, heat of the stator chamber is hard to be transferred to the rotor chamber. Further, it is preferable to branch the cooling liquid from a supply source and individually supply the liquids to the stator chamber and the rotor chamber in parallel so that a relation between the cooling liquid to be supplied to the stator chamber and the cooling liquid to be supplied to the rotor chamber is not a (series) relation between upstream and downstream. Thus, the cooling liquids are individually supplied to the stator chamber and the rotor chamber, so that cooling can be concentrated on each cooling target with each cooling liquid. Alternatively, it is preferable to run the liquid so that orientation of flow of the liquid to be supplied to the stator chamber is same as orientation of flow of the liquid to be supplied to the rotor chamber in the axial direction. In this case, heat exchange is harder to perform as compared with a case where both flows face each other (counter flow). Alternatively, it is also preferable to increase heat insulation effect by using a material with structurally low thermal conductivity (a resin material, or the resin material (film) for use together with a metal material) as a material of the stator can, by providing the stator can with a double side wall structure to make vacuum between walls, or the like. In this case, heat of the stator chamber is hard to be transferred to the rotor chamber, and the cooling can be concentrated on each cooling target with each cooling liquid. Note that it is preferable to take one of above-described measures or take a measure including combination of a plurality of the above-described measures. Consequently, for example, even if the orientation of the flow of the liquid to be supplied to the stator chamber is opposite to the orientation of the flow of the liquid to be supplied to the rotor chamber in the axial direction, the present invention is carried out in another manner, for example, by setting the temperature of the cooling liquid to be supplied to the stator chamber to be equal to or less than the temperature of the cooling liquid to be supplied to the rotor chamber.

As described above, the stator 18 is cooled directly with the cooling liquid that is separate from the cooling liquid in the rotor chamber 12 in thermal sense. In the stator chamber 26, the cooling liquid comes in contact directly with outer circumferential surfaces of the stator core 4 and the coil end portions 2a, and the stator 18 can be efficiently cooled. A plurality of stator chamber inlet portions 43 and a plurality of stator chamber outlet portions 44 may be provided.

In addition, a direction in which the cooling liquid flows in the stator chamber 26 may be opposite to that of this drawing. That is, the cooling liquid may flow into the stator chamber 26 from the stator chamber outlet portion 44 in an opposite direction to the arrow 84, and may flow out from the stator chamber inlet portion 43 in an opposite direction to the arrow 82. Note that the motor unit 10 is provided with a stuffing box 148 for mounting the mechanical seal 33.

Next, description will be made as to cooling of a drive circuit chamber in a case where the motor unit 10 includes the drive circuit chamber with reference to Fig. 1. The motor unit 10 includes the drive circuit 74 disposed in a drive circuit chamber 76 to drive the rotor 14, a drive circuit chamber inlet portion 78 configured such that a cooling liquid for cooling the drive circuit 74 flows into the drive circuit chamber 76, and a drive circuit chamber outlet portion 80 configured such that the cooling liquid flows out from the drive circuit chamber 76. An example of the drive circuit 74 is an inverter or the like that can continuously control a rotation speed of the rotor 14. Note that the drive circuit chamber 76 does not have to be cooled in a case where a quantity of heat to be generated is small. This drawing shows the drive circuit chamber 76 with a dotted line to illustrate that there is a case where the chamber does not have to be cooled.

In the embodiment of this drawing, for the drive circuit chamber 76, a housing 150 of the drive circuit chamber 76 is fixed to the first motor frame 56 with a fixture such as a screw. The housing 150 is fixed to the first motor frame 56 in a mounting part 152. The drive circuit chamber 76 may be fixed to a component of the motor unit 10, other than the first motor frame 56. The drive circuit chamber 76 may have a right-angled parallelepiped shape, or a cylinder shape that matches an outer shape of the first motor frame 56.

Furthermore, the drive circuit chamber 76 may be a device independently separate from the motor unit 10. In this drawing, the drive circuit chamber inlet portion 78 is disposed in the mounting part to the first motor frame 56. Furthermore, the drive circuit chamber inlet portion 78 is disposed at the same position as in the stator chamber outlet portion 44. The drive circuit chamber inlet portion 78 is connected directly to the stator chamber outlet portion 44. The drive circuit chamber inlet portion 78 and the stator chamber outlet portion 44 may be provided at different positions. In this case, the portions may be connected via a pipe.

The cooling liquid in the drive circuit chamber 76 flows into the drive circuit chamber 76 from the drive circuit chamber inlet portion 78 as shown with the arrow 84. The cooling liquid flows along a surface of the drive circuit 74, to cool the drive circuit 74. Afterward, the cooling liquid flows out from the drive circuit chamber outlet portion 80 as shown with an arrow 86. As shown in this drawing, the stator chamber 26 and the drive circuit chamber 76 are connected in series with respect to the flow of the cooling liquid. That is, the cooling liquid that cools an interior of the stator chamber 26 flows into the drive circuit chamber 76. Note that the cooling liquid that cools an interior of the drive circuit chamber 76 may flow into the stator chamber 26. Alternatively, the stator chamber 26 and the drive circuit chamber 76 may be connected in parallel with respect to the flow of the cooling liquid.

In the present embodiment, the cooling liquid flowing through the rotor chamber 12, the stator chamber 26 and the drive circuit chamber 76 is the same type of liquid, and is the handling liquid of the pump unit 19. The handling liquid is, for example, an electrically insulating liquid such as liquid methane, kerosene, liquid hydrogen or the like that is fuel of a liquid propellant rocket. Note that in a case where the same type of liquid can be used as the cooling liquid flowing through the rotor chamber 12 and the stator chamber 26, a through hole may be made in the stator can 7 to directly connect the rotor chamber 12 to the stator chamber 26. At this time, the cooling liquid flows from the rotor chamber 12 to the stator chamber 26, or from the stator chamber 26 to the rotor chamber 12 via the through hole.

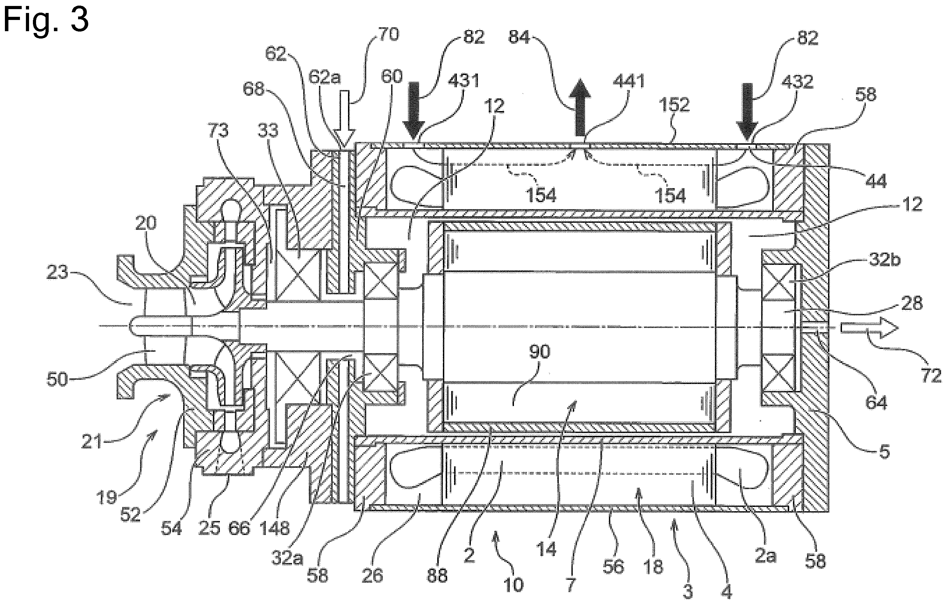

In addition, when the cooling liquid is supplied to the rotor chamber 12 and the stator chamber 26, the cooling liquid may be supplied to the stator chamber 26 as shown in Fig. 3 and described later. That is, a stator chamber inlet portion 431 and a stator chamber inlet portion 432 are provided in the motor casing 3 in vicinities of the coil end portions 2a that are opposite end portions of the motor coil 2 in the axial direction. Also, a stator chamber outlet portion 441 is disposed substantially at a position between these inlet portions in the motor casing 3, and the liquid fuel is supplied from the stator chamber inlet portion 431 and the stator chamber inlet portion 432 into the stator chamber as shown with the arrow 82.

The supplied liquid fuel passes through clearances 154 in the stator 4 and is collected from the stator chamber inlet portion 441 as shown with the arrow 84. Consequently, the liquid fuel supplied from the stator chamber inlet portion 431 and the stator chamber inlet portion 432 as shown with the arrow 82 preferentially comes in contact with and first cools the coil ends 2a, and hence the cooling of the coil ends 2a that are hard to be cooled by heat transfer through a solid such as the metal can be efficiently performed at the opposite end portions in the axial direction. In a process where the supplied liquid fuel passes through the clearances in the stator 4 as shown with the arrows 154 and is collected from the stator chamber inlet portion 441 as shown with the arrow 84, an entire stator core region can be cooled.

Next, description will be made as to another embodiment of the canned motor including the rotor chamber inlet portion 62 configured such that a cooling gas for cooling the rotor 14 flows into the rotor chamber 12, and the rotor chamber outlet portion 64 configured such that the cooling gas flows out from the rotor chamber 12 with reference to Fig. 1.

In the present embodiment, the stator 18 is cooled by supplying the liquid, and the rotor 14 is cooled by supplying the gas. In this embodiment, a canned motor in which rotational friction loss is reduced by the cooling gas is provided to solve a problem that, when the rotor 14 is cooled with the cooling liquid, the rotational friction loss due to the cooling liquid increases and interferes with high-speed rotation, in the case where the rotor 14 rotates at the high speed (from 10,000 to 100,000 rpm).

In the present embodiment, the cooling gas flows into the rotor chamber 12 from the rotor chamber inlet portion 62, flows through the rotor chamber 12, and flows out from the rotor chamber outlet portion 64. Consequently, the cooling gas for cooling the rotor, such as helium, hydrogen, methane or the like is supplied to an outer circumference of the rotor 14 (e.g., the clearance between the rotor can 88 and the stator can 7). Rotational friction loss due to the gas is smaller than the rotational friction loss due to the liquid, and hence the rotor 14 can be cooled while reducing the friction loss generated by the high-speed rotation of the rotor 14. In this case, friction loss generated due to the high-speed rotation of the rotor 14 is reduced, so that electric power to be inputted to the motor can be reduced, and heat generation loss in the stator can be reduced.

In the embodiment described above, the cooling liquid flows into the rotor chamber 12. However, in the present embodiment, the cooling gas flows into the rotor chamber 12. Here, the above embodiment and the present embodiment are different in that a substance for use in cooling is the liquid or the gas, but the embodiments are the same in configurations of the pump unit 19 and the motor unit 10. Therefore, description of a part described above with reference to Fig. 1 and overlapping with the present embodiment will not be repeated, and the present embodiment will be described with respect to new content.

The cooling gas is, for example, helium gas. The helium gas is for use in an operation of a valve, a shaft sealing purge gas and the like in a rocket, and may be therefore mounted in the rocket. In a case where the helium gas is not mounted in the rocket for the operation of the valve, the shaft sealing purge gas or the like, the helium gas is mounted in the rocket for cooling. As the cooling gas, gasified rocket engine fuel may be used as well.

The cooling gas flowing inside from the rotor chamber inlet portion 62 as shown with the arrow 70 passes through the space 66 and the radial bearing 32a to flow into the interior (rotor chamber 12) of the stator can 7. The cooling gas further passes through the interior of the stator can 7 and the radial bearing 32b, to flow out from the rotor chamber outlet portion 64 as shown with the arrow 72. Afterward, the cooling gas is released into the atmosphere or outer space. Note that in the case where the cooling gas is the gasified rocket engine fuel, the cooling gas may be fed to the combustion chamber.

Next, description will be made as to an embodiment in which two stator chamber inlet portions 431 and 432 allowing a cooling liquid to immediately hit coil ends 2a of a stator 2 and one stator chamber outlet portion 441 are arranged, and the cooling liquid is supplied from the stator chamber inlet portions 431 and 432 into a stator chamber 26, with reference to Fig. 3. In the embodiment shown in this drawing, the cooling liquid in the stator chamber is taken out from the stator chamber outlet portion 441 disposed at a substantially intermediate position between the stator chamber inlet portion 43 and the stator chamber outlet portion 44 that are shown in Fig. 1. Positions of the stator chamber inlet portion 431 and the stator chamber inlet portion 432 are about the same as positions of the stator chamber inlet portion 43 and the stator chamber outlet portion 44, respectively. The stator chamber outlet portion 441 is at a substantially intermediate position between the stator chamber inlet portion 43 and the stator chamber outlet portion 44. Note that the positions of the stator chamber inlet portion 431, the stator chamber inlet portion 432 and the stator chamber outlet portion 441 shown in Fig. 3 are examples, and may be other positions. It is preferable that the stator chamber inlet portion 431 and the stator chamber inlet portion 432 are located in vicinities of the coil ends 2a on opposite sides of the stator 18 in an axial direction of a motor.

The cooling liquid flows inside from the stator chamber inlet portion 431 and the stator chamber inlet portion 432 as shown with an arrow 82, and flows toward the stator chamber outlet portion 441 as shown with arrows 154. The cooling liquid flows out from the stator chamber outlet portion 441 as shown with an arrow 84, after the stator 18 is cooled.

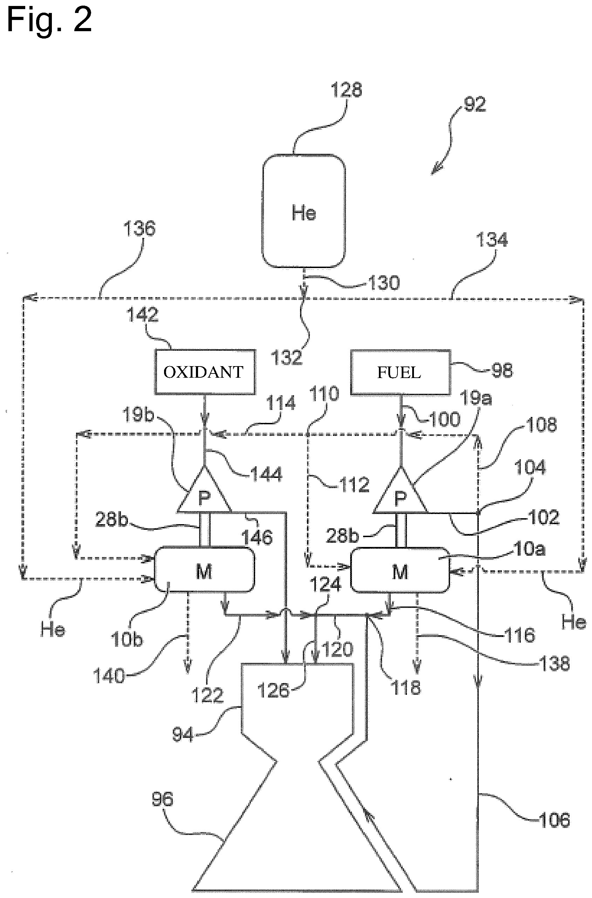

Next, description will be described as to a rocket engine system using the canned motor of the above-described embodiment in which the rotor is cooled with the gas with reference to Fig. 2. Fig. 2 is a block diagram showing an entire configuration of a rocket engine system 92. The rocket engine system 92 includes two canned motors of the embodiment in which the gas cooling is performed. That is, the rocket engine system 92 includes a pump unit 19a that is a fuel supply pump configured to be driven by one (motor unit 10a) of two motor units 10, and a pump unit 19b that is an oxidant supply pump configured to be driven by the other one (motor unit 10b) of the two motor units 10.

Also, the rocket engine system 92 includes a combustion chamber 94 configured to be supplied with fuel by the pump unit 19a, and to be supplied with oxidant by the pump unit 19b, and a nozzle 96 for injecting a gas generated by burning in the combustion chamber 94. The fuel such as liquid hydrogen, liquid methane or the like is fed from a fuel tank 98 to the pump unit 19a by a pipe 100, highly pressured by the pump unit 19a, and then fed to a pipe 102.

The fuel is distributed from the pipe 102 to a pipe 106 toward the nozzle 96 and a pipe 108 toward the motor unit 10 by a branch part 104. The branch part 104 includes, for example, a branch pipe branching from the pipe 102 to the pipe 106 and the pipe 108, and control valves disposed in the pipe 106 and the pipe 108, respectively. It is controlled by the respective control valves whether or not to run the fuel to the pipe 106 and the pipe 108. This also applies to a branch part described below.

Note that in the present embodiment, an upstream side of the branch part has a higher pressure than a downstream side of the branch part, and hence the control valves may not be provided in the branch part. The fuel is fed, by the pipe 106, into the combustion chamber 94 via outer circumferences of the nozzle 96 and the combustion chamber 94 for cooling the nozzle 96 and the combustion chamber 94.

On the other hand, the fuel is distributed from the pipe 108 to a pipe 112 toward the motor unit 10a and a pipe 114 toward the motor unit 10b by a branch part 110. The fuel is fed to the motor unit 10a by the pipe 112, to cool a stator 18 of the motor unit 10a, and then flows out from a pipe 116. The fuel flowing out from the pipe 116 is merged in the fuel flowing from the pipe 106 by a merging part 118, fed to a pipe 120, and then fed to the combustion chamber 94.

Furthermore, the fuel is fed to the motor unit 10b by the pipe 114, to cool a stator 18 of the motor unit 10b, and then flows out from a pipe 122. The fuel flowing out from the pipe 122 is merged in the fuel flowing from the pipe 120 by a merging part 124, fed to a pipe 126, and then fed to the combustion chamber 94.

Description will be made as to a transport route of helium gas for cooling a rotor 14 of the motor unit 10. The helium gas is fed from a helium gas tank 128 to a branch part 132 by a pipe 130. The helium gas is distributed from the pipe 130 to a pipe 134 toward the motor unit 10a and a pipe 136 toward the motor unit 10b by the branch part 132. The helium gas is fed to the motor unit 10a by the pipe 134, to cool the rotor 14 of the motor unit 10a, and then flows out from a pipe 138. The helium gas flowing outside is released to the atmosphere or outer space. The helium gas is fed to the motor unit 10b by the pipe 136, to cool the rotor 14 of the motor unit 10b, and then flows out from a pipe 140. The helium gas flowing outside is released to the atmosphere or outer space.

Next, description will be made as to a transport route of oxidant. The oxidant is fed from an oxidant tank 142 to the pump unit 19b by a pipe 144, highly pressured in the pump unit 19b, and then fed to a pipe 146. The oxidant is fed via the pipe 146 into the combustion chamber 94.

In this drawing, the cooling liquid (fuel) for cooling the motor unit 10 is supplied to a stator chamber 26 of the motor unit 10a and a stator chamber 26 of the motor unit 10b in parallel. Similarly, the helium gas for cooling the motor unit 10 is supplied to a rotor chamber 12 of the motor unit 10a and a rotor chamber 12 of the motor unit 10b in parallel.

The cooling liquid may be supplied to the stator chambers 26 of the motor unit 10a and the motor unit 10b in series. Similarly, the helium gas may be supplied to the rotor chambers 12 of the motor unit 10a and the motor unit 10b in series. That is, the cooling liquid may be supplied to the stator chamber 26 of the motor unit 10a and then to the stator chamber 26 of the motor unit 10b, or may be contrarily supplied to the stator chamber 26 of the motor unit 10b and then to the stator chamber 26 of the motor unit 10a.

Similarly, the helium gas may be supplied to the rotor chamber 12 of the motor unit 10a and then to the rotor chamber 12 of the motor unit 10b, or may be contrarily supplied to the rotor chamber 12 of the motor unit 10b and then to the rotor chamber 12 of the motor unit 10a.

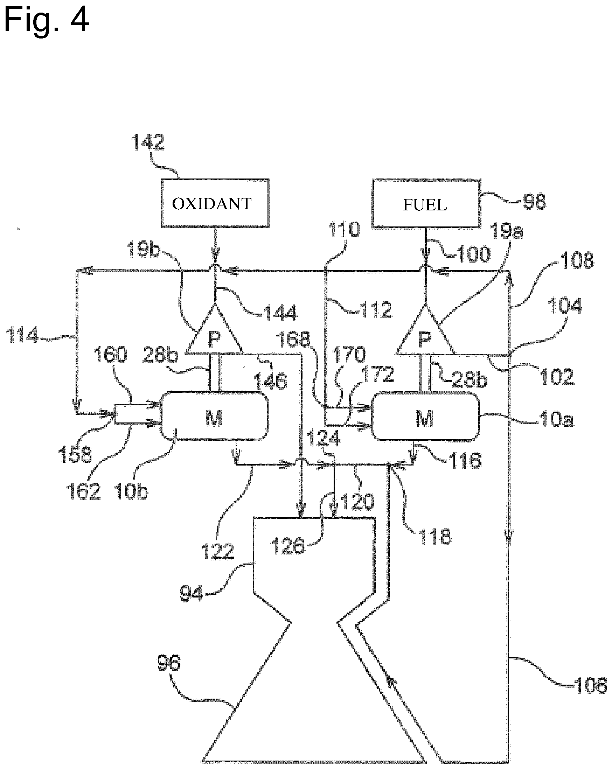

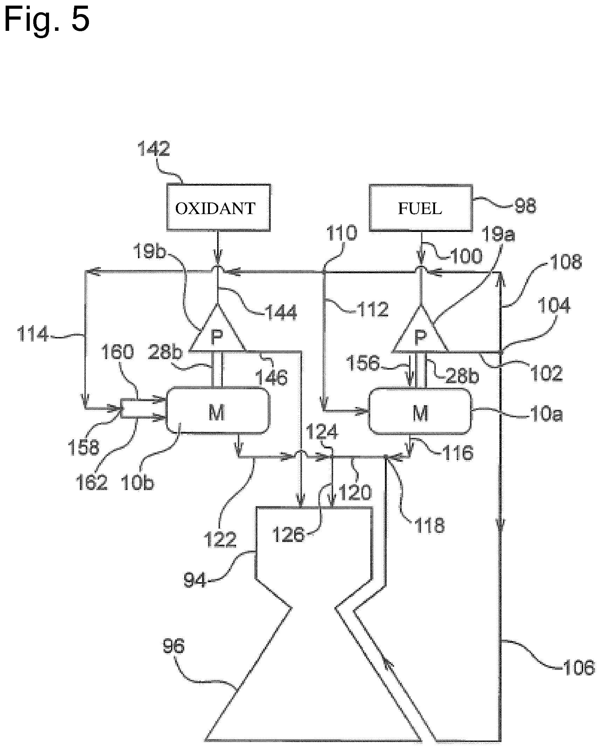

In Fig. 2, the helium gas is for use in cooling the rotor 14, but the fuel may be for use in cooling the rotor 14 as already described. This will be described with reference to Figs. 4 and 5. Figs 4 and 5 are block diagrams showing an entire configuration of a rocket engine system according to another embodiment of the present invention. These drawings show a cooling method of a canned motor in a case where fuel pressurized by a fuel pump is supplied to rotor chambers of respective canned motors for oxidant and for fuel (i.e., Fig. 1).

In Figs. 4 and 5, in a motor unit 10b that drives a pump for oxidant, fuel is supplied to an inlet 62a for a rotor chamber 12. The fuel is supplied to a stator chamber inlet portion 43 for a stator chamber 26 of the motor unit 10b. The fuel is distributed from a pipe 114 to a pipe 160 toward the inlet 62a and a pipe 162 toward the stator chamber inlet portion 43 by a branch part 158. The fuel passes through the rotor chamber 12 and the stator chamber 26, and then flows out to a pipe 122 via an unshown pipe and a merging part of this pipe.

In a motor unit 10a that drives a pump for fuel, the fuel is supplied to a rotor chamber 12 by the same method as in the oxidant pump, or from a clearance in a mechanical seal 33 without using an inlet 62a, or through a space formed around a spindle 28 between a discharge casing 54 and the rotor chamber 12 without disposing the mechanical seal 33. In a case of the same method as in the oxidant pump, the fuel is distributed from a pipe 112 to a pipe 170 toward the inlet 62a and a pipe 172 toward a stator chamber inlet portion 43 by a branch part 168. The pipe 170 supplies the fuel to the inlet 62a for the rotor chamber 12. The pipe 172 supplies the fuel to the stator chamber inlet portion 43 for a stator chamber 26. The fuel passes through the rotor chamber 12 and the stator chamber 26, and then flows out to a pipe 116 via an unshown pipe and a merging part of this pipe.

A solid line 156 of Fig. 5 shows flow of fuel to be supplied to the rotor chamber 12 from the clearance in the mechanical seal 33 without using the inlet 62a, or through the space formed around the spindle 28 between the discharge casing 54 and the rotor chamber 12 without disposing the mechanical seal 33. The fuel is supplied from a pipe 112 to the stator chamber inlet portion 43 for the stator chamber 26. The fuel passes through the rotor chamber 12 and the stator chamber 26, and then flows out to a pipe 116 via an unshown pipe and a merging part of this pipe. The liquid propellant rocket may include the rocket engine system shown in Figs. 2, 4 and 5.

The examples of the embodiments of the present invention have been described above, but the above embodiments of the present invention are described to facilitate understanding of the present invention, and are not intended to limit the present invention. Needless to say, the present invention may be changed or modified without departing from the scope, and the present invention includes equivalents to the invention. Also, in a range in which at least some of the above-described problems can be solved or a range in which at least some of effects are exhibited, arbitrary combination or omission of respective constituent components described in claims and description is possible.

### REFERENCE SIGNS LIST

- 2: motor coil
- 2a: coil end portion
- 3: motor casing
- 4: stator core
- 5: bearing cover
- 6: rotor
- 7: stator can
- 10: motor unit
- 10a: motor unit
- 10b: motor unit
- 12: rotor chamber
- 14: rotor
- 18: stator
- 19: pump unit
- 19a: pump unit
- 19b: pump unit
- 20: impeller
- 21: pump casing
- 23: suction port
- 25: discharge port
- 26: stator chamber
- 28: spindle
- 32: radial bearing
- 43: stator chamber inlet portion
- 44: stator chamber outlet portion
- 52: suction cover
- 54: discharge casing
- 56: first motor frame
- 58: second motor frame
- 60: bearing casing
- 62: rotor chamber inlet portion
- 62a: inlet
- 64: rotor chamber outlet portion
- 66: space
- 68: flow path
- 74: drive circuit
- 76: drive circuit chamber
- 78: drive circuit chamber inlet portion
- 80: drive circuit chamber outlet portion
- 88: rotor can
- 90: rotor core
- 92: rocket engine system
- 94: combustion chamber
- 96: nozzle
- 98: fuel tank
- 128: helium gas tank
- 142: oxidant

## Claims

1. A canned motor including:
a stator disposed in a stator chamber,
a rotor disposed in a rotor chamber, and
a can enclosing the rotor, the canned motor further including:
a rotor chamber inlet portion configured such that a cooling liquid for cooling the rotor flows into the rotor chamber, and
a rotor chamber outlet portion configured such that the cooling liquid flows out from the rotor chamber, the canned motor comprising:
a stator chamber inlet portion configured such that a cooling liquid for cooling the stator flows into the stator chamber, and
a stator chamber outlet portion configured such that the cooling liquid flowing inside from the stator chamber inlet portion flows out from the stator chamber.

2. A canned motor including:
a stator disposed in a stator chamber,
a rotor disposed in a rotor chamber, and
a can enclosing the rotor, the canned motor comprising:
a rotor chamber inlet portion configured such that a cooling gas for cooling the rotor flows into the rotor chamber, and
a rotor chamber outlet portion configured such that the cooling gas flows out from the rotor chamber.

3. The canned motor according to claim 2, further comprising:
a stator chamber inlet portion configured such that a cooling liquid for cooling the stator flows into the stator chamber, and
a stator chamber outlet portion configured such that the cooling liquid flows out from the stator chamber.

4. The canned motor according to any one of claims 1 to 3, wherein the rotor is configured to rotate from 10,000 times to 100,000 times per minute.

5. The canned motor according to any one of claims 1 to 4, wherein the cooling liquid is a handling liquid of the canned motor.

6. The canned motor according to any one of claims 1 to 5, further comprising:
a drive circuit disposed in a drive circuit chamber and configured to drive the rotor,
a drive circuit chamber inlet portion configured such that a cooling liquid for cooling the drive circuit flows into the drive circuit chamber, and
a drive circuit chamber outlet portion configured such that the cooling liquid flows out from the drive circuit chamber.

7. The canned motor according to claim 6, wherein the stator chamber and the drive circuit chamber are connected in series with respect to the flow of the cooling liquid.

8. A rocket engine system comprising:
a plurality of the canned motors according to any one of claims 1 to 7,
a fuel supply pump configured to be driven by one of the plurality of canned motors,
an oxidant supply pump configured to be driven by another one of the plurality of canned motors, and
a combustion chamber configured to be supplied with fuel by the fuel supply pump, and to be supplied with oxidant by the oxidant supply pump.

9. A rocket engine system comprising:
a plurality of the canned motors according to any one of claims 1 to 7, and
a fuel supply pump configured to be driven by one of the plurality of canned motors, wherein the fuel is supplied to the plurality of canned motors by the fuel supply pump.

10. A rocket engine system comprising:
a plurality of canned motors, and
a fuel supply pump configured to be driven by one of the plurality of canned motors, wherein fuel is supplied to the plurality of canned motors by the fuel supply pump.

11. A liquid propellant rocket comprising:
the rocket engine system according to any one of claims 8 to 10.
